# FASCICULE DE BREVET EUROPEEN

(11) **EP 2 724 810 B1**
(45) Date de publication et mention de la délivrance du brevet: **02.10.2019**
(21) Numéro de dépôt: 13181474.1
(22) Date de dépôt: 23.08.2013
(51) Int. Cl.: B23K 20/12

(54) **PROCÉDÉ ET SYSTÈME AMÉLIORÉS DE SOUDAGE PAR FRICTION MALAXAGE D'UN RAIDISSEUR SUR UN PANNEAU D'AÉRONEF**
Verbessertes Reibrührschweißverfahren und -system eines Aussteifungselements auf einem Luftfahrzeugpaneel
Improved system and method for friction stir welding of a stiffener on an aircraft panel

(30) Priorité: 07.09.2012 FR 1258392
(43) Date de publication de la demande: 30.04.2014
(73) Titulaire: Airbus Operations (Société par actions simplifiée), 31060 Toulouse (FR)
(72) Inventeur: Mialhe, Christophe, 81500 Giroussens (FR); Lieven, Patrick, 31620 Fronton (FR); Delahaye, Romain, 31770 Colomiers (FR)
(74) Mandataire: Augarde, Eric

(56) Documents cités:
- EP-A1- 1 864 747
- DE-A1-102008 044 087
- JP-A- H1 052 772
- JP-A- H1 128 581
- JP-A- H1 147 959
- JP-A- 2004 017 128
- US-A1- 2005 139 640

## Description

### DOMAINE TECHNIQUE

La présente invention concerne la fixation des raidisseurs sur des panneaux d'aéronefs, notamment d'avions.

Les panneaux concernés par l'invention peuvent être des panneaux de fuselage, de voilure, ou d'empennage, ou encore des panneaux faisant partie d'un réservoir ou d'une case de train, ou tout autre type de panneau.

Les raidisseurs fixés sur ces panneaux peuvent notamment être des cadres circonférentiels de fuselage, des lisses ou raidisseurs longitudinaux de fuselage, des longerons ou des nervures de voilure ou d'empennage, des traverses de plancher ou des rails de plancher, etc.

### ÉTAT DE LA TECHNIQUE ANTÉRIEURE

La fixation de raidisseurs sur des panneaux dans les aéronefs est en général réalisée par rivetage.

Afin de réduire la durée et le coût des opérations de fixation des raidisseurs sur les panneaux correspondants, d'autres techniques sont envisagées, dont en particulier la technique dite de soudage par friction malaxage. Cette technique est utilisée dans les procédés de soudage connus des documents DE 102008044087 A1, JP 2004017128 A ou encore US 2005/139640 A1. Des procédés selon le préambule de la revendication 1 sont par ailleurs connus des documents JP H1052772 A et JP H11047959 A.

La technique dite de soudage par friction malaxage, également dénommée *FSW* (de l'anglais *Friction Stir Welding*)*,* est connue pour permettre de manière générale une réalisation rapide d'une jonction mécanique durable qui permet un passage d'efforts entre les pièces assemblées avec une efficacité au moins équivalente à celle obtenue au moyen d'une jonction conventionnelle par rivetage.

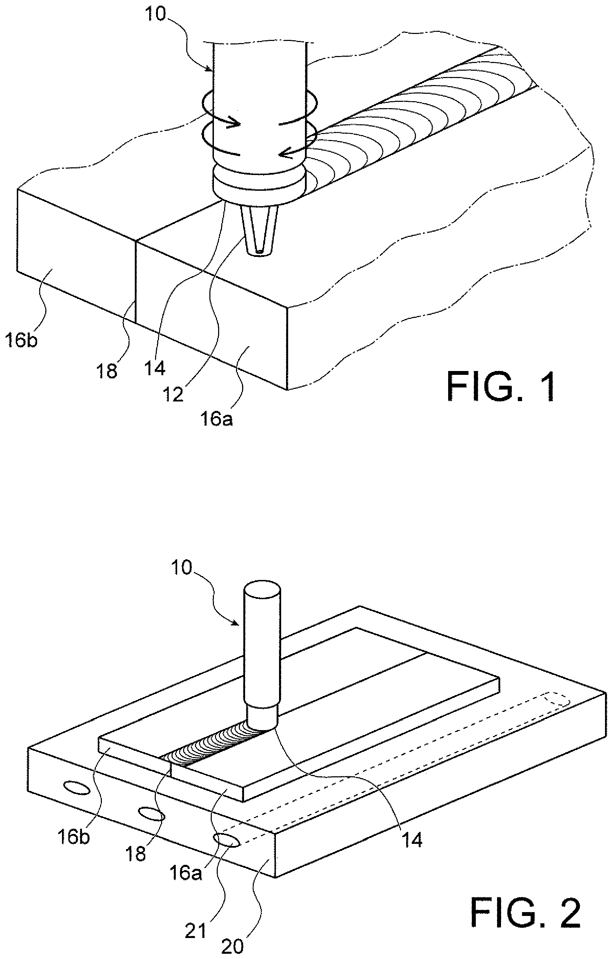

Cette technique, illustrée schématiquement sur la figure 1, fait appel à un dispositif de soudage comportant au moins une tête de soudage 10, comportant un pion rotatif 12 et un épaulement 14 s'étendant à la base du pion rotatif 12 et présentant un diamètre typiquement égal à 2 à 2,5 fois le diamètre moyen de ce pion rotatif 12.

Le soudage par friction malaxage de deux pièces 16a, 16b consiste en l'introduction du pion rotatif 12 dans les deux pièces au niveau de l'interface de jonction 18 entre celles-ci jusqu'à ce que l'épaulement 14 soit mis en contact avec la surface de chacune des pièces 16a, 16b. Cette introduction du pion rotatif 12 dans la matière constituant les pièces 16a, 16b est rendu possible par un ramollissement local de cette matière du fait d'un échauffement produit par la friction du pion rotatif 12 contre les deux pièces 16a et 16b. L'état pâteux de la matière des pièces 16a, 16b autour du pion rotatif 12 autorise alors un déplacement de ce pion rotatif 12 le long de l'interface de jonction 18. La rotation du pion rotatif 12, ainsi que, le cas échéant, celle de l'épaulement 14, provoquent un malaxage de la matière à l'état pâteux.

L'extrusion induite par le pion rotatif 12 et le forgeage assuré par l'épaulement 14 entraînent ainsi la formation d'un cordon de soudure de proche en proche. Ce cordon de soudure prend la forme d'une nouvelle structure métallurgique commune aux deux matériaux formée grâce à des phénomènes de restauration-recristallisation, et permet ainsi de garantir une bonne cohésion des deux pièces 16a, 16b après refroidissement.

Comme l'illustre schématiquement la figure 2, une contre-pression est appliquée sur la face de chaque pièce 16a, 16b opposée à la tête de soudage 10, au moyen d'une contre-forme 20, afin de contrer la pression exercée par le pion rotatif 12. Une telle contre-forme intègre parfois un dispositif de refroidissement permettant d'évacuer une partie de la chaleur générée par la friction, ce qui permet en général d'améliorer la tenue mécanique des pièces après soudage. Un tel dispositif de refroidissement prend par exemple la forme de canaux 21 intégrés à la contre-forme 20 et dans lesquels circule un fluide caloporteur.

La technique de soudage par friction malaxage permet un soudage dit « bord à bord », tel qu'illustré sur les figures 1 et 2, dans lequel l'axe du pion rotatif 12 est localement parallèle à l'interface de jonction entre les pièces à assembler. Cette technique permet également un soudage dit « par transparence », dans lequel l'axe du pion rotatif 12 est localement orthogonal à l'interface de jonction entre les pièces à assembler. Dans ce cas, l'une des pièces à assembler est interposée entre la tête de soudage et l'autre pièce à assembler.

La technique de soudage par friction malaxage présente notamment l'avantage d'être conduite en dessous de la température de fusion de la matière constituant les pièces à assembler, ce qui permet en particulier d'éviter des problèmes liés à la resolidification qui se posent habituellement avec d'autres techniques de soudage.

Cette technique présente en outre l'avantage de ne pas requérir d'apport de matière, et de ne pas entraîner d'émission de fumées polluantes.

De plus, la vitesse de déplacement du dispositif de soudage le long de l'interface de jonction des pièces à assembler peut atteindre 2 mètres par minute, de sorte que cette technique de soudage permet l'assemblage de pièces en peu de temps et à moindre coût.

Cette technique de soudage offre en outre des possibilités d'automatisation avancée.

Cependant, l'application de cette technique de soudage à l'assemblage de raidisseurs et de panneaux d'aéronefs pose un problème.

En effet, dans l'assemblage conventionnel d'un raidisseur et d'un panneau d'aéronef, une couche de mastic est en général interposée entre le raidisseur et le panneau, afin notamment de garantir l'étanchéité entre ces éléments et limiter ainsi les risques de corrosion de ces éléments, et afin également de limiter les phénomènes d'usure résultant de vibrations entre le raidisseur et le panneau d'aéronef.

Or, dans le cas de la technique de soudage par friction malaxage, bien que le problème de vibrations rencontré avec le mode d'assemblage par rivetage puisse être moins marqué, le problème relatif à l'étanchéité entre les pièces assemblées continue en revanche de se poser.

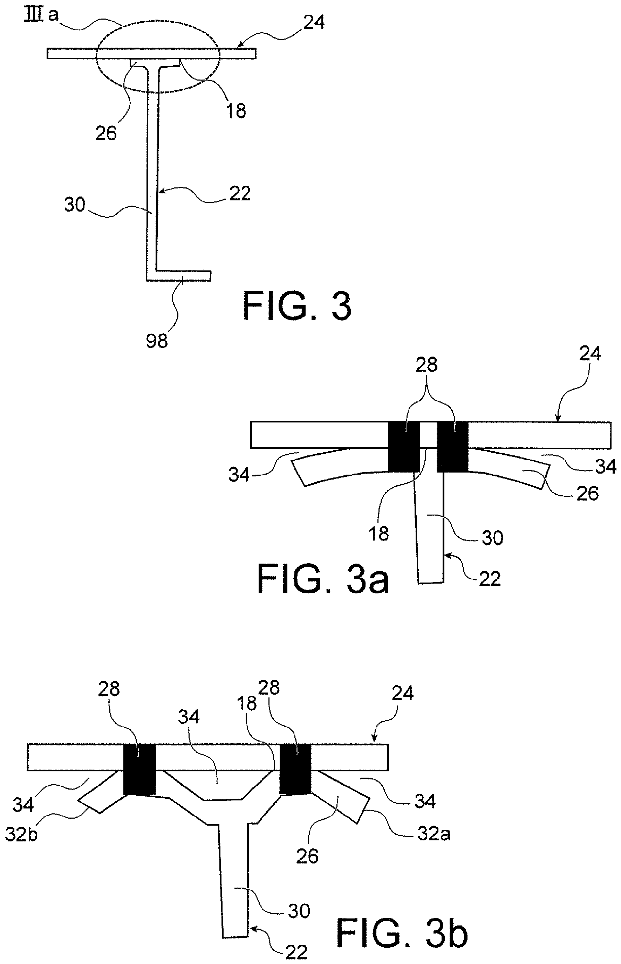

Ce problème d'étanchéité est illustré par les figures 3, 3a et 3b.

La figure 3 est une vue schématique partielle en coupe longitudinale d'un cadre circonférentiel 22 fixé sur un panneau 24 de fuselage d'avion par un procédé de soudage par friction malaxage par transparence de type connu, sans utilisation de mastic interposé entre les pièces assemblées.

La figure 3a illustre à plus grande échelle la jonction entre la semelle 26 du cadre circonférentiel 22 et le panneau de fuselage 24, dans le cas d'un soudage au moyen de deux cordons de soudure 28 relativement proches de l'âme 30 du cadre circonférentiel 22.

La figure 3b est une vue semblable à la figure 3a, illustrant le cas d'un soudage au moyen de deux cordons de soudure 28 relativement éloignés de l'âme 30 du cadre circonférentiel 22 et respectivement proches des bords opposés 32a et 32b de la semelle 26 de ce cadre circonférentiel 22.

Dans les deux cas, le mode d'assemblage ne permet pas d'éviter l'apparition de microcavités 34, dont les dimensions sont exagérées sur ces figures pour des raisons de clarté. De telles microcavités, couramment dénommées « pièges à corrosion », permettent la pénétration d'humidité au niveau de la jonction entre les pièces et favorisent ainsi la corrosion de ces pièces.

Or, dans le cas du soudage par friction malaxage, l'interposition d'une couche de mastic entre un raidisseur et un panneau d'aéronef n'est pas souhaitable car le mastic se mélange à la matière constituant le raidisseur et le panneau durant le soudage, ce qui entraîne une réduction des qualités structurelles de l'assemblage soudé.

Bien entendu, ce problème se pose lorsque la largeur de la semelle à souder est supérieure à la largeur de l'empreinte du pion rotatif dans cette semelle, c'est-à-dire au diamètre du pion rotatif, et notamment lorsque la largeur de la semelle est supérieure au double du diamètre du pion rotatif.

### EXPOSÉ DE L'INVENTION

L'invention a notamment pour but d'apporter une solution simple, économique et efficace à ce problème.

Elle a en particulier pour but d'offrir un procédé d'assemblage de raidisseurs sur des panneaux d'aéronef, qui présente les avantages du soudage par friction malaxage en termes de qualité d'assemblage, de rapidité, et de faible coût, tout en limitant les risques de corrosion des pièces assemblées et en permettant à ces pièces de conserver des propriétés structurelles optimales.

L'invention propose à cet effet un procédé de soudage par friction malaxage (FSW) linéaire par transparence d'une semelle d'un raidisseur sur au moins un panneau pour aéronef, selon la revendication 1, dans lequel un cordon de soudure est réalisé le long de ladite semelle du raidisseur au moyen d'au moins un pion rotatif, et dans lequel la largeur de ladite semelle dudit raidisseur est supérieure à un diamètre maximal dudit pion rotatif.

Selon l'invention, ledit cordon de soudure s'étend en section depuis un premier bord latéral jusqu'à un second bord latéral opposé de ladite semelle du raidisseur.

Par « diamètre maximal » du pion, il faut comprendre le diamètre en section du pion au niveau où ce pion est le plus large. Le pion peut en effet présenter une forme telle que le diamètre de sa section transversale varie, par exemple une forme tronconique ou conique.

Le procédé selon l'invention est en effet utile lorsque la largeur de la semelle du raidisseur est supérieure au diamètre maximal du pion rotatif, notamment lorsque la largeur de la semelle du raidisseur est supérieure au double du diamètre maximal du pion rotatif.

Le procédé de soudage selon l'invention permet d'éviter l'apparition de microcavités entre la semelle du raidisseur et le panneau, et permet donc de réduire les risques de corrosion de ces pièces.

Ce procédé permet donc aussi de rendre inutile le recours à une couche de mastic interposée entre la semelle du raidisseur et le panneau et donc d'éviter les problèmes de pollution de matière inhérents à l'utilisation d'une telle couche de mastic dans le cadre de la technique de soudage par friction malaxage.

De ce fait, la semelle du raidisseur est de préférence appliquée directement contre le panneau.

La cohésion de l'assemblage obtenu à l'issue du procédé selon l'invention peut ainsi être optimale.

D'une manière générale, l'invention offre ainsi un mode d'utilisation optimal de la technique de soudage par friction malaxage pour l'assemblage de raidisseurs et de panneaux pour aéronefs.

L'invention offre donc les avantages inhérents à la technique de soudage par friction malaxage, notamment en termes de rapidité et de possibilités d'automatisation.

Le raidisseur concerné par le procédé selon l'invention comprend typiquement une âme raccordée à la semelle du raidisseur et s'étendant orthogonalement à cette semelle, ou de manière inclinée par rapport à ladite semelle par exemple dans le cas d'un raidisseur destiné à être intégré à une pointe avant ou à un cône arrière d'aéronef.

Le procédé selon l'invention est défini dans la revendication 1 et comprend d'une manière générale l'application de la semelle du raidisseur sur une première surface dudit panneau et l'application d'au moins une tête de soudage sur une seconde surface dudit panneau, opposée à ladite première surface, ainsi que le déplacement de cette tête de soudage le long de la semelle du raidisseur, de manière à générer de la chaleur par friction et entraîner ainsi localement un ramollissement du matériau formant le panneau et du matériau formant la semelle du raidisseur, depuis le premier bord latéral jusqu'au second bord latéral de cette semelle.

Le procédé comprend bien entendu l'application de moyens de contre-appui sur la semelle du raidisseur afin de contrer la pression exercée par la tête de soudage précitée. Des exemples de tels moyens de contre-appui seront décrits plus en détail dans ce qui suit.

Du fait que le procédé selon l'invention consiste en un soudage par transparence, le cordon de soudure s'étend, dans le sens de l'épaisseur, à partir de ladite seconde surface du panneau. De plus, pour favoriser l'homogénéité structurelle de la semelle du raidisseur au terme du procédé de soudage, le cordon de soudure s'étend de préférence sur une majeure partie de l'épaisseur de la semelle du raidisseur.

La semelle du raidisseur peut être soudée conjointement sur deux panneaux adjacents.

Le procédé réalise ainsi conjointement un soudage bord à bord des deux panneaux et un soudage par transparence de la semelle du raidisseur sur des portions respectives adjacentes des panneaux.

D'une manière générale, ledit panneau peut être un panneau de fuselage et ledit raidisseur peut être un cadre circonférentiel ou un segment angulaire d'un tel cadre circonférentiel.

Dans ce cas, le déplacement de chaque tête de soudage s'effectue selon une trajectoire incurvée.

La semelle d'un tel cadre circonférentiel présente par exemple la forme d'un cylindre de révolution ou la forme d'une portion de cylindre de révolution.

Dans ce cas, le déplacement de chaque tête de soudage s'effectue selon une trajectoire circulaire, ou en arc de cercle, centrée sur un axe de fuselage défini par ledit panneau de fuselage.

Un panneau de fuselage pour aéronef présente une surface extérieure, définie comme étant la surface destinée à être située du côté extérieur de l'aéronef et à être ainsi baignée par le vent relatif s'écoulant le long du fuselage en vol, et une surface intérieure située du côté opposé. Le cadre circonférentiel précité est bien entendu soudé sur la surface intérieure du panneau de fuselage.

Dans le cas où le procédé concerne le soudage d'un tel cadre circonférentiel sur deux panneaux de fuselage adjacents, la jonction obtenue au terme du procédé est du type couramment appelé « jonction orbitale ».

En variante, ledit raidisseur peut être un raidisseur longitudinal, également dénommé lisse.

Dans ce cas, le déplacement de chaque tête de soudage peut s'effectuer selon une trajectoire sensiblement rectiligne, notamment lorsque le panneau de fuselage est destiné à un tronçon de fuselage situé entre la pointe avant et le cône arrière d'un aéronef.

En variante encore, le panneau peut être un panneau aérodynamique d'un élément de voilure d'aéronef tel qu'une aile ou un empennage d'avion.

Dans ce cas, le raidisseur considéré peut être un longeron ou une nervure d'un tel élément d'aéronef.

En variante encore, le panneau peut être un panneau faisant partie d'un plancher d'aéronef, auquel cas le raidisseur peut être une traverse supportant un tel plancher ou encore un rail pour le guidage de sièges devant être posés sur un tel plancher.

En variante encore, le panneau peut faire partie d'une case de train d'atterrissage d'aéronef, ou encore former le fond d'un réservoir dans un aéronef.

D'une manière générale, le procédé selon l'invention comprend de préférence l'utilisation d'un système de soudage qui comprend une pluralité de têtes de soudage comprenant chacune un pion rotatif ainsi qu'un épaulement s'étendant à la base du pion rotatif, et qui comprend en outre une unité de contre-appui présentant une surface d'appui.

Dans ce cas, ce procédé comprend d'une part l'enfoncement des pions rotatifs respectifs desdites têtes de soudage dans ledit panneau et dans ladite semelle du raidisseur, puis le déplacement desdites têtes de soudage le long de ladite semelle du raidisseur selon une direction de soudage, à la faveur d'un ramollissement local de la matière formant le panneau et de la matière formant la semelle du raidisseur, provoqué par la chaleur induite par la friction desdits pions rotatifs.

D'autre part, conjointement à cet enfoncement puis à ce déplacement des pions rotatifs, le procédé comprend l'application de la surface d'appui de l'unité de contre-appui sur la semelle du raidisseur de manière à contrer la pression exercée par lesdits pions rotatifs.

De préférence, les pions rotatifs respectifs des têtes de soudage sont décalés mutuellement selon une direction transversale orthogonale à la direction de soudage et à un axe de rotation de chacun des pions rotatifs.

Préférentiellement, l'empreinte de l'ensemble desdits pions rotatifs respectifs desdites têtes de soudage s'étend en section sensiblement depuis le premier bord latéral jusqu'au second bord latéral de la semelle du raidisseur.

Par « sensiblement », il faut comprendre que l'empreinte s'étend jusqu'à une distance de chaque bord latéral de la semelle du raidisseur inférieure à 0,2 mm.

Cela permet de garantir que le cordon de soudure obtenu au terme du procédé s'étende lui-même depuis le premier bord latéral jusqu'au second bord latéral de la semelle du raidisseur.

Par « empreinte », il faut comprendre la marque qui serait produite dans la matière par un enfoncement des pions rotatifs dans cette matière indépendamment de tout phénomène de malaxage induit par la rotation desdits pions.

Il est à noter que l'épaulement de chaque tête de soudage peut être statique ou rotatif. Dans ce dernier cas, le sens de rotation de l'épaulement peut être celui du pion rotatif de la même tête de soudage, ou être le sens inverse de celui dudit pion rotatif selon une configuration couramment dénommée « delta N »,

Préférentiellement, chacun des pions rotatifs pénètre dans la semelle du raidisseur jusqu'à une profondeur distante de 0,2 mm à 0,5 mm de la surface de la semelle située du côté opposé aux têtes de soudage.

Cela permet de réduire le risque que les pions rotatifs entrent en contact avec des moyens de contre-appui, comme cela apparaîtra plus clairement dans ce qui suit.

Dans le mode de réalisation préféré du procédé de l'invention, ladite pluralité de têtes de soudage comprend trois têtes de soudage agencées selon une configuration triangulaire.

Une telle configuration des têtes de soudage est particulièrement bien adaptée à la formation de cordons de soudure couvrant toute la largeur des semelles des raidisseurs d'aéronef.

Dans ce cas, ladite pluralité de têtes de soudage comprend de préférence deux têtes de soudage latérales centrées par rapport à un même plan orthogonal à une direction de soudage, ainsi qu'une tête de soudage centrale décalée, selon ladite direction de soudage, par rapport à chacune desdites têtes de soudage latérales.

Par « direction de soudage », il faut comprendre une direction tangente à la trajectoire globalement suivie par chaque tête de soudage. Une telle direction est sensiblement orthogonale à l'axe de rotation de chaque pion rotatif précité.

Préférentiellement, la projection, selon la direction de soudage, du pion rotatif de la tête de soudage centrale, intercepte les pions rotatifs respectifs des têtes de soudage latérales.

Cette caractéristique permet de garantir un certain recouvrement entre l'empreinte du pion rotatif de la tête de soudage centrale d'une part, et les empreintes respectives des pions rotatifs respectifs des têtes de soudage latérales d'autre part. Cela permet notamment d'optimiser l'homogénéité du cordon de soudure.

Dans le mode de réalisation préféré de l'invention, une première desdites têtes de soudage est positionnée en regard d'une âme du raidisseur tandis que les deux autres têtes de soudage sont décalées par rapport à ladite âme du raidisseur, et le pion rotatif de ladite première tête de soudage pénètre moins profondément dans ladite semelle du raidisseur que les pions rotatifs respectifs des deux autres têtes de soudage.

Cette configuration permet de réduire les risques de dégradation de parties structurelles critiques du raidisseur situées au voisinage de l'âme de ce dernier.

En particulier, ladite première tête de soudage peut être ladite tête de soudage centrale.

Cette configuration est particulièrement adaptée lorsque le raidisseur comporte une âme sensiblement centrée par rapport à la semelle de ce raidisseur.

Dans le mode de réalisation préféré de l'invention, lesdites têtes de soudage se déplacent dans un sens tel que ladite tête de soudage centrale soit disposée en arrière desdites têtes de soudage latérales.

D'une manière générale, d'autres configurations de têtes de soudage sont possibles pour la mise en oeuvre du procédé de soudage selon l'invention, dans la mesure où ces têtes de soudage permettent l'obtention d'un cordon de soudure couvrant toute la largeur de la semelle du raidisseur concerné.

Par ailleurs, ladite surface d'appui de l'unité de contre-appui est avantageusement formée conjointement par deux galets presseurs portés par l'unité de contre-appui et qui se déplacent en roulant contre la semelle du raidisseur,

D'une manière générale, de tels galets presseurs présentent notamment l'avantage de pouvoir intégrer un dispositif d'échange thermique de conception simple et peu coûteuse pour permettre un refroidissement efficace du raidisseur et du panneau au cours du soudage.

En variante, un tel refroidissement peut être assuré par une projection de liquide de refroidissement sur la zone de soudage, par exemple au moyen d'un robot additionnel prévu à cet effet, ou encore par immersion de l'ensemble de l'installation de soudage dans un bassin rempli d'un liquide caloporteur, sans sortir du cadre de l'invention.

Chacun de ces galets presseurs présente avantageusement un épaulement appliqué contre un chant correspondant de la semelle du raidisseur.

De plus, ces galets presseurs prennent de préférence une âme du raidisseur en sandwich.

En variante, la surface d'appui de l'unité de contre-appui peut être formée d'une pièce statique, également dénommée contre-forme, sans sortir du cadre de la présente invention.

L'invention concerne également un système de soudage selon la revendication 12, pour la mise en oeuvre d'un procédé de soudage du type décrit ci-dessus, comprenant trois têtes de soudage agencées en triangle, comprenant chacune un pion rotatif ainsi qu'un épaulement s'étendant à la base du pion rotatif

Bien entendu, ce système présente les avantages décrits ci-dessus en rapport avec le procédé selon l'invention, et peut de surcroît présenter une ou plusieurs des caractéristiques préférentielles décrites ci-dessus.

En variante, d'autres types de systèmes de soudage peuvent néanmoins être utilisés pour la mise en oeuvre du procédé de soudage selon l'invention.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en perspective de deux pièces en cours de soudage par une technique de friction malaxage bord à bord ;
- la figure 2, déjà décrite, est une vue schématique en perspective de deux pièces en cours de soudage par une technique de friction malaxage bord à bord, illustrant également une contre-forme permettant le support des deux pièces ;
- la figure 3, déjà décrite, est une vue schématique en coupe longitudinale d'un cadre circonférentiel fixé sur un panneau de fuselage d'avion, au moyen d'une technique de soudage par friction malaxage de type connu ;
- la figure 3a est une vue à plus grande échelle du détail IIIa de la figure 3 ;
- la figure 3b est une vue semblable à la figure 3a, d'un cadre circonférentiel fixé sur un panneau de fuselage d'avion au moyen d'une autre technique de soudage par friction malaxage de type connu ;
- la figure 4 est une vue schématique de côté d'une installation de soudage comprenant plusieurs systèmes de soudage selon un mode de réalisation préféré de l'invention, pour l'assemblage de cadres circonférentiels et de panneaux de fuselage d'avion ;
- la figure 5 est une vue schématique en coupe transversale, selon le plan V-V de la figure 4, de l'installation de soudage de la figure 4, illustrant un système de soudage appartenant à cette installation de soudage ;
- la figure 6 est une vue schématique partielle à plus grande échelle et en coupe longitudinale selon le plan VI-VI de la figure 5, du système de soudage de la figure 5 ;
- la figure 7 est une vue schématique à plus grande échelle d'une partie de la figure 5, en coupe selon le plan VII-VII de la figure 5 ;
- la figure 8 est une vue schématique partielle en perspective d'un panneau de fuselage d'aéronef et de deux cadres circonférentiels fixés sur celui-ci, illustrant le passage de têtes de soudage sur ce panneau ;
- la figure 9 est une vue schématique partielle de côté d'une installation de soudage comprenant un système de soudage selon un autre mode de réalisation de l'invention ;
- la figure 10 est une vue schématique partielle de côté d'une installation de soudage comprenant un système de soudage selon encore un autre mode de réalisation de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

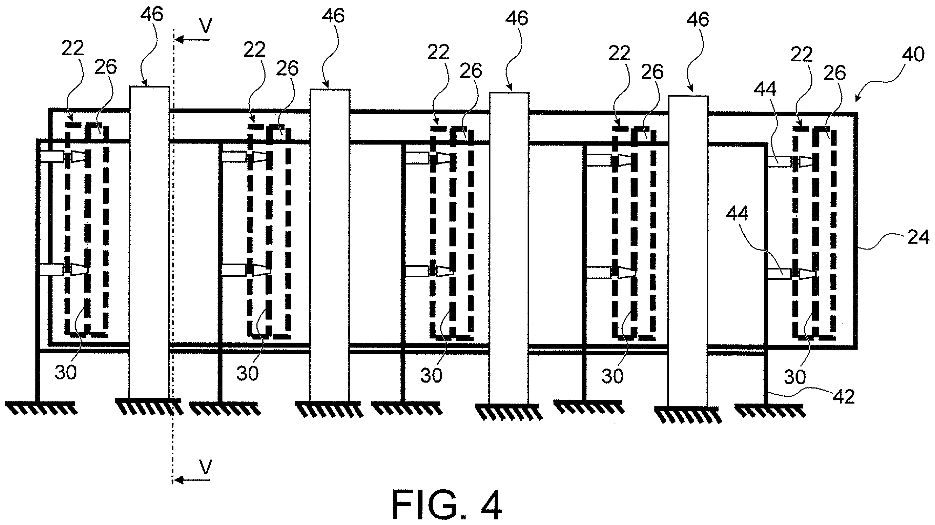

La figure 4 illustre de manière générale une installation de soudage par friction malaxage 40 destinée à la mise en oeuvre d'un procédé de soudage par friction malaxage par transparence pour l'assemblage de cadres circonférentiels sur des panneaux de fuselage d'avion, conformément à un mode de réalisation préféré de l'invention.

Cette figure 4 montre en particulier cinq cadres circonférentiels 22 qui sont chacun fixés sur un support 42, par exemple au moyen de deux pions de centrage 44 passant respectivement dans deux trous de centrage du cadre circonférentiel 22, ce dernier pouvant être retenu par exemple au moyen d'épingles coopérant avec les pions de centrage 44.

Une peau formée d'un panneau 24 de fuselage d'avion est appliquée sur la surface extérieure de la semelle 26 de chacun des cadres circonférentiels 22.

De plus, quatre systèmes de soudage 46 sont disposés côte-à-côte en regard du support 42 portant les cadres circonférentiels 22 et le panneau de fuselage 24. Pour des raisons de clarté, les quatre systèmes de soudage 46 sont représentés décalés longitudinalement par rapport aux cadres circonférentiels 22, mais lors du fonctionnement de cette installation de soudage 40, chacun des systèmes de soudage 46 est disposé sensiblement en regard d'un cadre circonférentiel 22 correspondant.

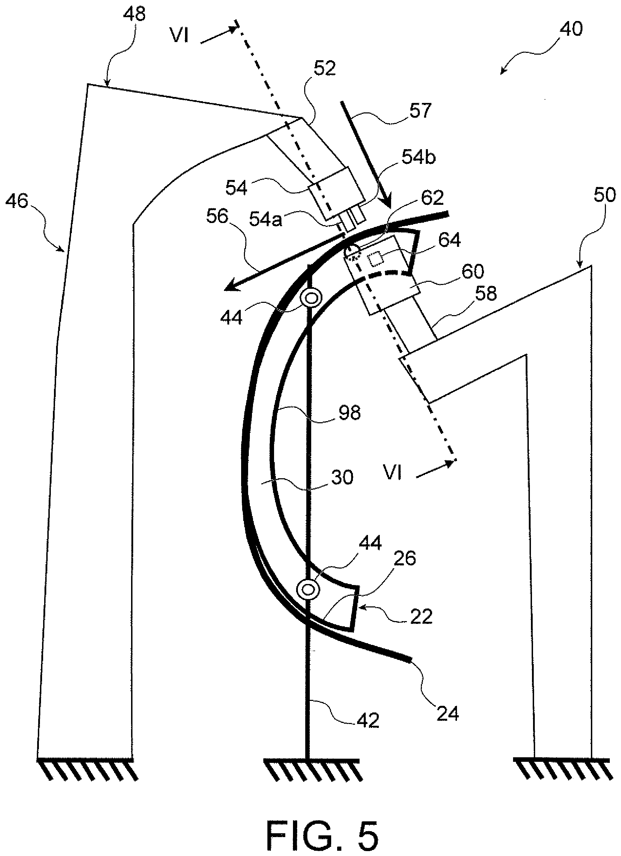

La figure 5 représente l'installation de soudage 40 en coupe selon le plan V-V de la figure 4 et illustre ainsi l'un de ces systèmes de soudage 46 vu de côté.

Ce système de soudage 46 comporte globalement une unité de soudage 48 et une unité de contre-appui 50 disposées en regard l'une de l'autre, de part et d'autre du support 42 portant les cadres circonférentiels 22 et le panneau de fuselage 24.

L'unité de soudage 48 se présente sous la forme d'un robot comportant, à une extrémité d'un bras robotisé 52, un dispositif de soudage 54 pourvu d'une pluralité de têtes de soudage, comme cela apparaîtra plus clairement dans ce qui suit.

L'unité de soudage 48 est conçue de manière à permettre notamment un déplacement du dispositif de soudage 54 dans le plan de la figure 5, le long du cadre circonférentiel 22, selon une direction locale de soudage 56 tangente au panneau de fuselage 24.

L'unité de soudage 48 est en outre conçue de manière à permettre un déplacement du dispositif de soudage 54 dans une direction de pénétration de pions rotatifs respectifs des têtes de soudage de ce dispositif dans la matière formant le panneau de fuselage 24 et le cadre circonférentiel 22, comme cela apparaîtra plus clairement dans ce qui suit. Cette direction de pénétration est symbolisée par la flèche 57 et est parallèle à la droite formant l'intersection du plan de la figure 5 et du plan VI-VI visible sur cette figure 5. Par définition, cette direction de pénétration 57 est normale à la surface extérieure du panneau de fuselage 24 et est donc orthogonale à la direction de soudage 56 précitée.

L'unité de contre-appui 50 se présente également sous la forme d'un robot muni d'un bras robotisé 58. Ce dernier présente une extrémité munie de deux bras de support 60 disposés de part et d'autre de l'âme 30 du cadre circonférentiel 22, seul l'un de ces bras de support 60 étant visible sur la figure 5. Ces bras de support 60 portent chacun un galet presseur 62 ainsi qu'un galet de guidage 64, comme cela apparaîtra plus clairement dans ce qui suit.

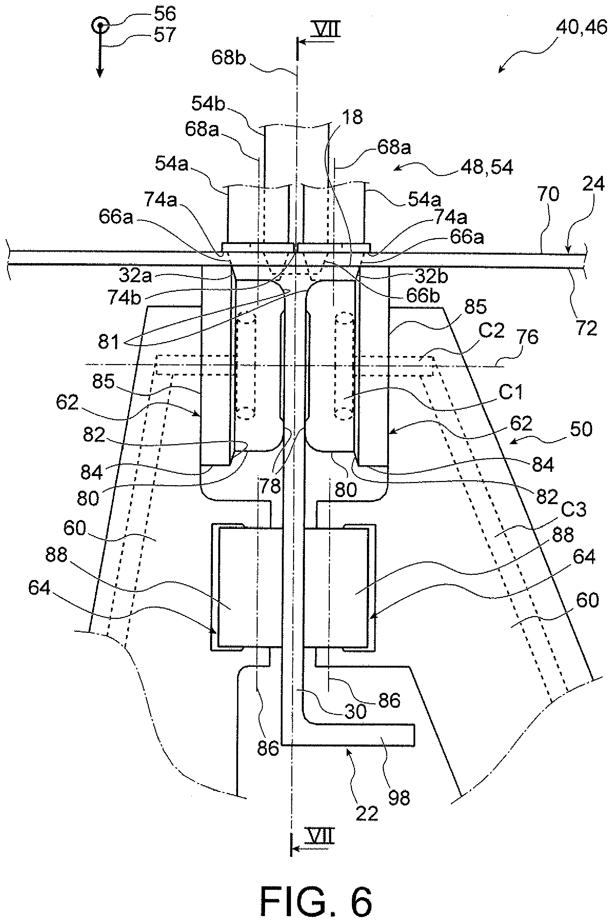

La figure 6 illustre plus en détail les principaux éléments permettant la mise en oeuvre du procédé de soudage par friction malaxage au moyen de l'installation de soudage 40.

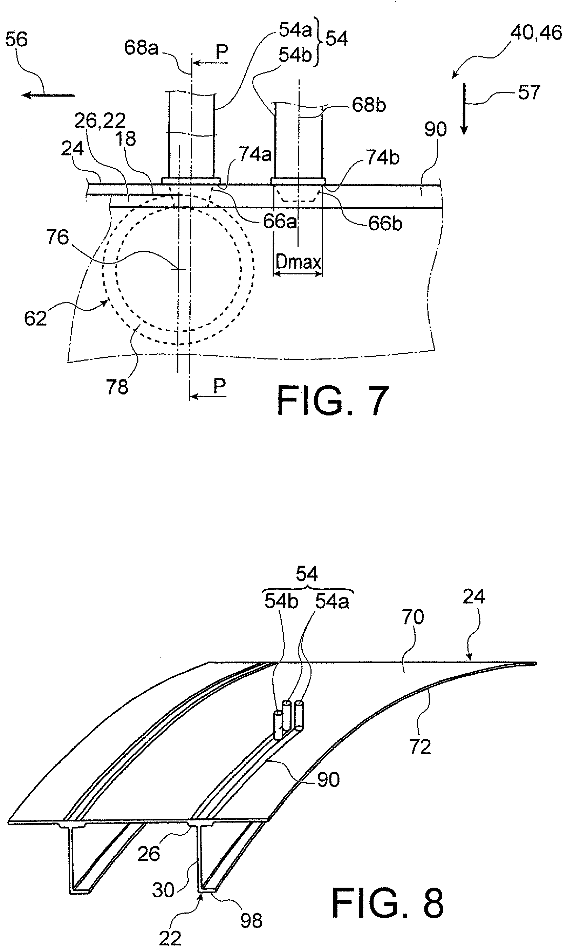

Comme le montre cette figure 6, le dispositif de soudage 54 comporte trois têtes de soudage disposées en triangle (figure 6). Ces têtes de soudage se répartissent en deux têtes de soudage latérales 54a et une tête de soudage centrale 54b, cette dernière étant décalée vers l'arrière par rapport aux têtes de soudage latérales 54a eu égard à la direction de soudage 56, comme cela apparaît plus clairement sur la figure 7.

Chacune des trois têtes de soudage 54a, 54b précitées comporte un pion rotatif 66a, 66b (figures 6 et 7), déplaçable en rotation selon un axe de rotation 68a, 68b sensiblement orthogonal à la direction de soudage 56 et donc aussi sensiblement normal aux surfaces extérieure 70 et intérieure 72 du panneau de fuselage 24. Chacune des trois têtes de soudage 54a, 54b comporte en outre un épaulement 74a, 74b formé à la base du pion rotatif 66a, 66b correspondant. Cet épaulement 74a, 74b peut être déplaçable en rotation dans un sens identique ou contraire au sens de rotation du pion rotatif 66a, 66b correspondant, ou encore être statique, d'une manière connue en soi. Chaque pion rotatif 66a, 66b présente une forme globalement tronconique, de sorte que la section de chaque pion rotatif se réduit en direction de l'extrémité libre du pion rotatif, c'est-à-dire du côté opposé à l'épaulement 74a, 74b correspondant. On définit le diamètre maximal Dmax (figure 7) de chaque pion rotatif comme étant le diamètre de la section du pion au niveau où ce dernier est le plus large, qui se trouve être à la base du pion rotatif à proximité de l'épaulement 74a, 74b correspondant.

Bien entendu, l'unité de soudage 48 intègre des moyens moteurs permettant l'entraînement en rotation des pions rotatifs 66a, 66b et, le cas échéant, l'entraînement en rotation des épaulements 74a, 74b.

Les épaulements 74a, 74b respectifs des têtes de soudage précitées s'étendent dans un même plan. Ces épaulements 74a, 74b peuvent ainsi être appliqués simultanément sur la surface extérieure 70 du panneau de fuselage 24, comme l'illustrent les figures 6 et 7.

Les pions rotatifs 66a respectifs des têtes de soudage latérales 54a présentent une hauteur légèrement inférieure à l'épaisseur cumulée du panneau de fuselage 24 et de la semelle 26 du cadre circonférentiel 22. La différence entre la hauteur de ces pions rotatifs 66a et l'épaisseur cumulée du panneau de fuselage 24 et de la semelle 26 est typiquement de l'ordre de quelques dixièmes de millimètre, de préférence comprise entre 0,2 mm et 0,5 mm. Par « hauteur » des pions rotatifs, il faut bien entendu comprendre leur étendue selon leur axe de rotation.

De plus, le pion rotatif 66b de la tête de soudage centrale 54b présente une hauteur inférieure à celle des pions rotatifs 66a respectifs des têtes de soudage latérales 54a, mais supérieure à l'épaisseur du panneau de fuselage 24. La différence de hauteur entre le pion rotatif 66b d'une part et les pions rotatifs 66a d'autre part est typiquement de l'ordre de quelques dixièmes de millimètre, et de préférence comprise entre 0,2 mm et 0,5 mm.

D'une manière générale, les trois pions rotatifs 66a, 66b sont agencés de sorte que la projection du pion rotatif 66b de la tête de soudage centrale 54b, perpendiculairement à un plan P (figure 7) passant par les axes de rotation 68a respectifs desdits pions rotatifs 66a respectifs des têtes de soudage latérales 54a, en direction de ces derniers, intercepte ces derniers pions rotatifs 66a (figure 6). De plus, la largeur de l'ensemble formé par les trois pions rotatifs 66a, 66b est sensiblement égale à la largeur de la semelle 26 du cadre circonférentiel 22. Cela permet de garantir que le cordon de soudure obtenu au moyen de l'unité de soudage soit en mesure de couvrir toute la largeur de la semelle 26 précitée, comme cela apparaîtra plus clairement dans ce qui suit.

La figure 6 montre en outre une partie d'extrémité de chacun des bras de support 60, qui comporte le galet presseur 62 et le galet de guidage 64 portés par le bras de support 60.

Chaque galet presseur 62 est monté à rotation sur le bras de support 60 correspondant, autour d'un axe de rotation 76 qui constitue également un axe de révolution géométrique du galet.

Les galets presseurs 62 présentent des joues 78 respectives destinées à être appliquées respectivement contre les deux côtés de l'âme 30 du cadre circonférentiel 22. De cette manière, l'âme 30 du cadre circonférentiel 22 peut être prise en sandwich entre les joues 78 respectives des galets presseurs 62 comme illustré sur la figure 6. A cet effet, le bras robotisé 58 de l'unité de contre-appui 50 comporte des moyens de manoeuvre des bras de support 60 capables de solliciter chaque bras de support 60 en direction de l'autre bras de support 60, et ainsi solliciter lesdits galets presseurs 62 l'un en direction de l'autre.

Chaque galet presseur 62 présente en outre une piste circonférentielle principale 80 de forme cylindrique de révolution autour de l'axe de rotation 76, s'étendant depuis la joue 78 du galet presseur 62, et destinée à être appliquée sur la surface intérieure de la semelle 26 du cadre circonférentiel 22, comme illustré sur la figure 6.

La joue 78 de chaque galet presseur 62 est raccordée à la piste circonférentielle principale 80 correspondante par une partie circonférentielle incurvée 81 apte à épouser la surface incurvée qui raccorde le côté correspondant de l'âme 30 du cadre circonférentiel 22 à la semelle 26 de celui-ci.

Les pistes circonférentielles principales 80 respectives des deux galets presseurs 62 forment conjointement une surface d'appui sur la semelle 26 du cadre circonférentiel 22, dans la terminologie propre à l'invention.

De plus, chaque galet presseur 62 présente un épaulement circonférentiel 82 définissant une extrémité de la piste circonférentielle principale 80 du galet presseur du côté opposé à la joue 78 de ce dernier. Cet épaulement circonférentiel 82 est raccordé à une piste circonférentielle secondaire 84 du galet presseur, s'étendant jusqu'à une face d'extrémité 85 de ce galet presseur 62 définie du côté opposé à la joue 78 de ce dernier. La piste circonférentielle secondaire 84 est destinée à être sensiblement au contact de la surface intérieure 72 du panneau de fuselage 24 comme illustré sur la figure 6. A cet effet, l'épaulement circonférentiel 82 de chaque galet presseur 62 présente une largeur sensiblement égale à l'épaisseur de la semelle 26 du cadre circonférentiel 22.

Il est à noter que les pistes circonférentielles principale 80 et secondaire 84 de chaque galet presseur peuvent être de forme cylindrique ou tronconique.

Les galets presseurs 62 intègrent en outre un dispositif de refroidissement. Chacun de ces galets presseurs comporte ainsi un canal sensiblement annulaire C1 centré sur l'axe de rotation 76 du galet presseur, et présentant une extrémité communiquant avec un canal d'entrée C2 et une extrémité opposée communiquant avec un canal de sortie (non visible sur la figure). Lesdits canaux d'entrée et de sortie débouchent sur la face d'extrémité 85 du galet presseur et sont raccordés respectivement à un conduit d'alimentation C3 et à un conduit de sortie (non visible sur la figure) qui sont ménagés dans le bras de support 60 correspondant et reliés à un échangeur thermique (non représenté) permettant le refroidissement du fluide caloporteur.

Par ailleurs, chaque galet de guidage 64 est monté à rotation autour d'un axe de rotation 86 respectif, qui est orthogonal à l'axe de rotation 76 du galet presseur 62 correspondant.

Chaque galet de guidage 64 présente une piste circonférentielle de guidage 88 de forme cylindrique de révolution autour de l'axe de rotation 86 du galet de guidage 64, et destinée à être appliquée sur une face correspondante de l'âme 30 du cadre circonférentiel 22.

Le procédé de soudage par friction malaxage d'un cadre circonférentiel 22 sur un panneau de fuselage 24, au moyen de l'un des systèmes de soudage 46 de l'installation de soudage 40, va maintenant être décrit plus en détail, en référence aux figures 5 à 8.

Ce procédé comporte dans un premier temps un pré-positionnement de l'unité de soudage 48 et de l'unité de contre-appui 50 du système de soudage 46 en regard d'un cadre circonférentiel 22. Au besoin, ce pré-positionnement peut être obtenu par un déplacement du système de soudage 46 de l'installation de soudage 40, et/ou par un déplacement du support 42 portant les cadres circonférentiels 22 et le panneau de fuselage 24.

Le procédé comporte ensuite un positionnement des pions rotatifs 66a, 66b respectifs des trois têtes de soudage 54a, 54b au droit de la semelle 26 du cadre circonférentiel 22. Compte-tenu de l'agencement des trois pions rotatifs 66a, 66b, la projection de l'ensemble formé par ces trois pions rotatifs, selon la direction de pénétration 57, intercepte alors sensiblement toute la largeur de ladite semelle 26. Ce positionnement peut être obtenu par une manoeuvre du bras robotisé 52 de l'unité de soudage 48.

Le procédé comporte ensuite une manoeuvre de l'unité de soudage 48, notamment du bras robotisé 52, de manière à amener les extrémités libres des pions rotatifs 66a, 66b au contact de la surface extérieure du panneau de fuselage 24.

Le procédé comporte aussi un positionnement de chaque galet presseur 62 de l'unité de contre-appui 50 de sorte que la joue 78 de chaque galet presseur 62 soit appliquée contre l'âme 30 du cadre circonférentiel 22 et de sorte que la piste circonférentielle principale 80 de chaque galet presseur 62 soit appliquée contre la semelle 26 du cadre circonférentiel 22. En particulier, chaque galet presseur 62 est positionné de sorte que son axe de rotation 76 soit localement parallèle au panneau de fuselage 24 et orthogonal aux directions de soudage 56 et de pénétration 57. Le positionnement des galets presseurs 62 peut être obtenu par une manoeuvre de l'unité de contre-appui 50, notamment du bras robotisé 58.

Dans cette position des galets presseurs 62, illustrée sur la figure 6, l'axe de rotation 76 de chaque galet presseur 62 est orthogonal à l'âme 30 du cadre circonférentiel 22 tandis que l'axe de rotation 86 de chaque galet de guidage 64 est parallèle à l'âme 30 précitée. De plus, l'épaulement circonférentiel 82 de chaque galet presseur 62 est appliqué contre le chant latéral de la semelle 26 du cadre circonférentiel 22 (figure 6), et la piste circonférentielle 88 de chaque galet de guidage 64 est appliquée contre l'âme 30 du cadre circonférentiel 22.

D'une manière générale, les galets presseurs 62 sont en outre positionnés en regard du dispositif de soudage 54. Dans l'exemple illustré, le positionnement des galets presseurs 62 est tel que chacun des galets presseurs 62 est intercepté par l'axe de rotation 68a du pion rotatif 66a de l'une des têtes de soudage latérales 54a (figures 6 et 7). Plus précisément, l'axe de révolution 76 de chacun des galets presseurs 62 est faiblement décalé vers l'avant par rapport l'axe de rotation 68a du pion rotatif 66a correspondant, d'une manière telle que la projection de cet axe de révolution 76 de chacun des galets presseurs 62 parallèlement à l'axe de rotation 68a dudit galet presseur intercepte tout de même ce dernier.

Le procédé comprend la mise en rotation des pions rotatifs 66a, 66b, et le cas échéant, la mise en rotation des épaulements 74a, 74b associés, puis l'enfoncement des pions rotatifs dans la matière formant le panneau de fuselage 24 puis également dans la matière formant la semelle 26 du cadre circonférentiel 22. Cet enfoncement est rendu possible par un ramollissement local de la matière induit par la friction des pions rotatifs, selon le principe bien connu du soudage par friction malaxage.

Le procédé comprend ensuite la manoeuvre de l'unité de soudage 48, notamment du bras robotisé 52, de sorte que les têtes de soudage 54a, 54b se déplacent le long du cadre circonférentiel 22, de préférence d'une manière telle que les pions rotatifs 66a, 66b parcourent l'intégralité de la semelle 26 de ce cadre circonférentiel 22.

Au cours du déplacement des têtes de soudage 54a, 54b, la rotation rapide des pions rotatifs 66a, 66b produit, autour de chacun de ces pions rotatifs, un malaxage de la matière localement ramollie qui forme le panneau de fuselage 24 ainsi que la semelle 26. Compte-tenu de l'agencement des trois pions rotatifs 66a, 66b, la région de matière malaxée s'étend d'un bord latéral 32a à l'autre 32b de ladite semelle 26. Dans l'exemple illustré, l'empreinte de l'ensemble des trois pions rotatifs 68a, 68b couvre en section l'intégralité de la semelle 26 précitée au cours du déplacement des têtes de soudage 54a, 54b. Il faut comprendre par là que cette empreinte s'étend d'un bord latéral 32a à l'autre 32b de la semelle 26. Par « empreinte », il faut comprendre la marque qui serait produite dans la matière par un enfoncement des pions rotatifs 66a, 66b indépendamment de tout phénomène de malaxage induit par la rotation desdits pions.

De plus, toujours au cours du déplacement des têtes de soudage 54a, 54b, du fait de la hauteur limitée du pion rotatif 66b de la tête de soudage centrale 54b comme expliqué ci-dessus, ce dernier pion rotatif 66b n'atteint pas les surfaces incurvées du cadre circonférentiel 22 qui sont respectivement au contact des parties circonférentielles incurvées 81 respectives des galets presseurs 62, et qui raccordent respectivement les faces de l'âme 30 du cadre circonférentiel 22 à la semelle 26 de celui-ci. L'intégrité de ces surfaces incurvées du cadre circonférentiel 22 peut ainsi être préservée.

En outre, les pions rotatifs 66a respectifs des têtes de soudage latérales 54a n'atteignent pas les pistes circonférentielles principales 80 respectives des galets presseurs 62, du fait de la hauteur limitée de ces pions rotatifs 66a, comme expliqué ci-dessus.

Dans le même temps, l'unité de contre-appui 50 est manoeuvrée de manière à produire un roulement des galets presseurs 62 sur la surface intérieure de la semelle 26 du cadre circonférentiel 22 et sur la surface intérieure 72 du panneau de fuselage 24, de manière synchronisée avec le déplacement du dispositif de soudage 54, de sorte que les galets presseurs 62 exercent en permanence un appui sensiblement opposé à la pression exercée par l'ensemble des pions rotatifs 66a, 66b respectifs des têtes de soudage 54a, 54b, comme illustré par la figure 7.

Les galets presseurs 62 participent en outre au confinement et à la conformation de la matière ramollie en épousant la section de la semelle 26 du cadre circonférentiel 22. L'épaulement circonférentiel 82 de chacun des galets presseurs 62 permet en particulier de retenir la matière de chaque côté de ladite semelle 26.

Conjointement au déplacement des galets presseurs 62, les galets de guidage 64 roulent respectivement sur les deux faces de l'âme 30 du cadre circonférentiel 22 et contribuent ainsi au centrage de ce cadre circonférentiel 22 par rapport au panneau de fuselage 24.

Au terme du procédé de soudage, après refroidissement, la matière précédemment malaxée retrouve sa rigidité et forme un cordon de soudure 90 (figure 8) assurant une parfaite cohésion entre la semelle 26 du cadre circonférentiel 22 et le panneau de fuselage 24. Ce cordon de soudure 90 correspond à la région de matière précédemment malaxée et couvre donc toute la largeur de la semelle 26 du cadre circonférentiel 22.

Le procédé décrit ci-dessus correspond au travail de l'un des systèmes de soudage 46 de l'installation 40. Bien entendu, les autres systèmes de soudage 46 peuvent mettre en oeuvre le même procédé en parallèle.

Il est à noter que le procédé décrit ci-dessus peut également être appliqué au soudage d'un cadre circonférentiel conjointement sur deux panneaux de fuselage adjacents. Dans ce cas, le procédé réalise conjointement un soudage bord à bord des deux panneaux adjacents et un soudage par transparence du cadre circonférentiel sur les extrémités adjacentes desdits panneaux.

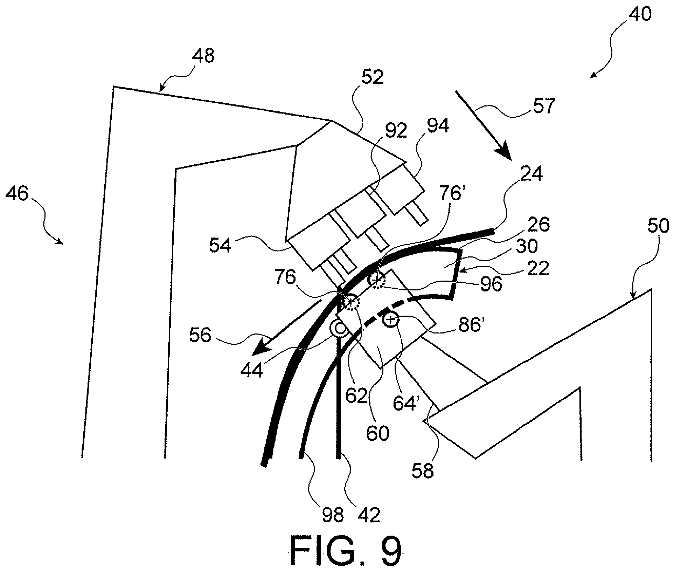

La figure 9 illustre un système de soudage 46 selon un autre mode de réalisation de l'invention, dans lequel l'unité de soudage 48 comporte en outre des caractéristiques de la revendication 12, un dispositif de contrôle non destructif 92 ainsi qu'un dispositif de traitement anticorrosion 94 qui sont portés par le bras robotisé 52, et qui peuvent être chacun d'un type conventionnel. Le dispositif de contrôle non destructif 92 est par exemple un dispositif de contrôle par ultrasons.

Au cours de la mise en oeuvre du procédé de soudage, l'unité de soudage est positionnée de sorte que le dispositif de contrôle non destructif 92 soit disposé en retard, c'est-à-dire en arrière, par rapport au dispositif de soudage 54, et de sorte que le dispositif de traitement anticorrosion 94 soit disposé en retard, c'est-à-dire en arrière, par rapport au dispositif de contrôle non destructif 92, eu égard à la direction de soudage 56.

De cette manière, le dispositif de contrôle non destructif 92 permet de contrôler la qualité du cordon de soudure 90 immédiatement après sa formation, de manière automatique.

En cas de détection d'un défaut, le procédé de soudage comprend alors un retour en arrière du dispositif de soudage 54 puis une reprise du soudage à partir de la zone défectueuse du cordon de soudure 90.

De plus, le dispositif de traitement anticorrosion 94 permet l'application d'un traitement anticorrosion sur la surface extérieure du panneau de fuselage 24, au niveau du cordon de soudure 90, immédiatement après le contrôle de la qualité de ce dernier lorsque ce contrôle n'a pas révélé de défaut.

En variante ou de manière complémentaire, un dispositif de contrôle non destructif et/ou un dispositif anticorrosion peut équiper le bras robotisé 58 de l'unité de contre-appui 50 afin d'agir sur la semelle 26 du cadre circonférentiel 22.

De plus, l'exemple de la figure 9 illustre une autre configuration de galets presseurs et de galets de guidage.

En effet, l'unité de contre-appui 50 de la figure 9 comporte non seulement les deux galets presseurs 62 décrits ci-dessus mais également deux galets presseurs additionnels 96 disposés en arrière des galets presseurs 62 eu égard à la direction de soudage 56 et semblables à ceux-ci. Ces galets presseurs additionnels 96 sont également appliqués sur la surface intérieure de la semelle 26 du cadre circonférentiel 22.

L'unité de contre-appui 50 comporte deux galets de guidage 64' dont les axes de rotation 86' sont parallèles aux axes de rotation 76 et 76' respectifs des galets presseurs 62 et 96. Ces galets de guidage 64' sont appliqués sur la surface intérieure du talon 98 du cadre circonférentiel 22. Il est à noter que ce talon 98 peut être aperçu plus clairement sur les figures 6 et 8.

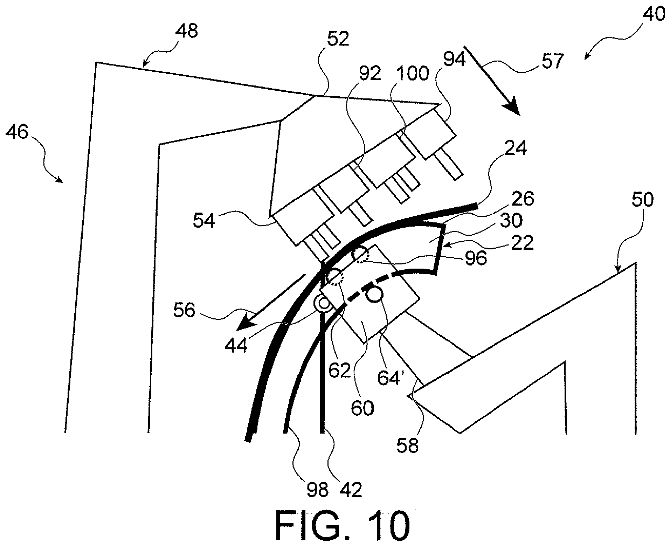

Par ailleurs, dans un autre mode de réalisation de l'invention illustré sur la figure 10, l'unité de soudage 48 comporte en outre des caractéristiques de la revendication 12, un dispositif de réparation formé d'un second dispositif de soudage 100, de préférence semblable au dispositif de soudage 54 décrit ci-dessus, mais agencé entre le dispositif de contrôle non destructif 92 et le dispositif de traitement anticorrosion 94.

Ce second dispositif de soudage 100 est maintenu inactif tant que le dispositif de contrôle non destructif 92 ne détecte aucun défaut, et est activé suite à la détection éventuelle d'un défaut. Dans ce cas, le procédé comprend alors la reprise du soudage dans la zone défectueuse du cordon de soudure 90 au moyen du second dispositif de soudage 100. Au terme de cette reprise de la zone défectueuse, le procédé se poursuit normalement au moyen du dispositif de soudage 54.

Le second dispositif de soudage 100 permet ainsi d'éviter tout retour en arrière du dispositif de soudage 54 en cas de détection d'un défaut du cordon de soudure 90 au moyen du dispositif de contrôle non destructif 92, ce qui permet de rendre encore plus rapide le procédé de soudage.

Dans la description qui précède, un exemple de procédé de soudage selon l'invention et d'installation permettant la mise en oeuvre de ce procédé ont été décrits en ce qui concerne le soudage d'un cadre circonférentiel sur un panneau de fuselage d'avion.

Il est à noter que le procédé selon l'invention peut être appliquée au soudage d'autres pièces, notamment au soudage de raidisseurs longitudinaux, longerons ou traverses.

## Revendications

1. Procédé de soudage par friction malaxage (FSW) linéaire par transparence d'une semelle (26) d'un raidisseur (22) sur au moins un panneau (24) pour aéronef, dans lequel un cordon de soudure (90) est réalisé le long de ladite semelle (26) du raidisseur par l'enfoncement d'au moins un pion rotatif (66a, 66b) dans ledit panneau (24) et dans ladite semelle (26) du raidisseur, puis le déplacement dudit pion rotatif (66a, 66b) le long de ladite semelle (26) du raidisseur selon une direction de soudage (56), à la faveur d'un ramollissement local de la matière formant ledit panneau (24) et de la matière formant ladite semelle (26) du raidisseur, provoqué par la chaleur induite par la friction dudit pion rotatif (66a, 66b), et dans lequel la largeur de ladite semelle (26) dudit raidisseur (22) est supérieure à un diamètre maximal dudit pion rotatif (66a, 66b), le procédé étant **caractérisé en ce que** le ramollissement de la matière concerne une région qui s'étend en section depuis un premier bord latéral (32a) jusqu'à un second bord latéral opposé (32b) de ladite semelle (26) du raidisseur au cours du déplacement dudit pion rotatif (66a, 66b), de sorte que ledit cordon de soudure (90) s'étend en section depuis le premier bord latéral (32a) jusqu'au second bord latéral (32b).

2. Procédé selon la revendication 1, dans lequel la largeur de ladite semelle (26) dudit raidisseur (22) est supérieure au double dudit diamètre maximal dudit pion rotatif (66a, 66b).

3. Procédé selon l'une quelconque des revendications précédentes, dans lequel est utilisé un système de soudage (46) comprenant une pluralité de têtes de soudage (54a, 54b) comprenant chacune un pion rotatif (66a, 66b) ainsi qu'un épaulement (74a, 74b) s'étendant à la base du pion rotatif, ledit système de soudage comprenant en outre une unité de contre-appui (50) présentant une surface d'appui (80), ledit procédé comprenant :
- d'une part, l'enfoncement des pions rotatifs (66a, 66b) respectifs desdites têtes de soudage (54a, 54b) dans ledit panneau (24) et dans ladite semelle (26) du raidisseur, puis le déplacement desdites têtes de soudage le long de ladite semelle du raidisseur selon ladite direction de soudage (56), à la faveur d'un ramollissement local de la matière formant ledit panneau (24) et de la matière formant ladite semelle (26) du raidisseur, provoqué par la chaleur induite par la friction desdits pions rotatifs (66a, 66b) ;
- d'autre part, l'application de ladite surface d'appui (80) de ladite unité de contre-appui (50) sur ladite semelle (26) du raidisseur (22) de manière à contrer la pression exercée par lesdits pions rotatifs (66a, 66b).

4. Procédé selon la revendication 3, dans lequel lesdits pions rotatifs (66a, 66b) respectifs desdites têtes de soudage (54a, 54b) sont décalés mutuellement selon une direction transversale orthogonale à ladite direction de soudage (56) et à un axe de rotation (68a, 68b) de chacun desdits pions rotatifs.

5. Procédé selon la revendication 3 ou 4, dans lequel l'empreinte de l'ensemble desdits pions rotatifs (66a, 66b) respectifs desdites têtes de soudage (54a, 54b) s'étend en section sensiblement depuis le premier bord latéral (32a) jusqu'au second bord latéral (32b) de la semelle (26) du raidisseur.

6. Procédé selon l'une quelconque des revendications 3 à 5, dans lequel ladite pluralité de têtes de soudage comprend trois têtes de soudage (54a, 54b) agencées selon une configuration triangulaire.

7. Procédé selon la revendication 6, dans lequel ladite pluralité de têtes de soudage comprend deux têtes de soudage latérales (54a) centrées par rapport à un même plan (P) orthogonal à ladite direction de soudage (56), ainsi qu'une tête de soudage centrale (54b) décalée, selon ladite direction de soudage (56), par rapport à chacune desdites têtes de soudage latérales (54a).

8. Procédé selon la revendication 7, dans lequel une première (54b) desdites têtes de soudage est positionnée en regard d'une âme (30) du raidisseur (22) tandis que les deux autres têtes de soudage (54b) sont décalées par rapport à ladite âme (30) du raidisseur (22), et le pion rotatif (66b) de ladite première tête de soudage (54b) pénètre moins profondément dans ladite semelle (26) du raidisseur (22) que les pions rotatifs (66a) respectifs des deux autres têtes de soudage (54a).

9. Procédé selon la revendication 8, dans lequel ladite première tête de soudage est ladite tête de soudage centrale (54b).

10. Procédé selon l'une quelconque des revendications 7 à 9, dans lequel lesdites têtes de soudage se déplacent dans un sens tel que ladite tête de soudage centrale (54b) soit disposée en arrière desdites têtes de soudage latérales (54a).

11. Procédé selon l'une quelconque des revendications 4 à 10, dans lequel ladite surface d'appui (80) est formée conjointement par deux galets portés par ladite unité de contre-appui et qui se déplacent en roulant contre ladite semelle (26) du raidisseur (22).

12. Système de soudage (46) pour la mise en oeuvre du procédé selon l'une quelconque des revendications précédentes, qui comprend trois têtes de soudage (54a, 54b) comprenant chacune un pion rotatif (66a, 66b) ainsi qu'un épaulement (74a, 74b) s'étendant à la base dudit pion rotatif (66a,66b), **caractérisé en ce que** lesdites têtes de soudage (54a,54b) sont agencées en triangle.

## Patentansprüche

1. Verfahren zum linearen Transparenz-Reibrührschweißen (FSW) einer Grundplatte (26) eines Versteifungselements (22) auf mindestens ein Paneel (24) für ein Luftfahrzeug, wobei eine Schweißnaht (90) entlang der Grundplatte (26) des Versteifungselements durch das Eindrücken mindestens eines Drehstifts (66a, 66b) in das Paneel (24) und in die Grundplatte (26) des Versteifungselements, dann durch das Bewegen des Drehstifts (66a, 66b) entlang der Grundplatte (26) des Versteifungselements in einer Schweißrichtung (56), durch eine lokale Aufweichung des Materials, welches das Paneel (24) bildet, und des Materials, welches die Grundplatte (26) des Versteifungselements bildet, die durch die Hitze herbeigeführt wird, die durch die Reibung des Drehstifts (66a, 66b) bewirkt wird, ausgeführt wird, und wobei die Breite der Grundplatte (26) des Versteifungselements (22) größer als ein maximaler Durchmesser des Drehstifts (66a, 66b) ist, wobei das Verfahren **dadurch gekennzeichnet ist, dass** die Aufweichung des Materials einen Bereich betrifft, der sich im Querschnitt von einem ersten Seitenrand (32a) bis zu einem zweiten, gegenüberliegenden Seitenrand (32b) der Grundplatte (26) des Versteifungselements während der Bewegung des Drehstifts (66a, 66b) erstreckt, so dass sich die Schweißnaht (90) im Querschnitt von dem ersten Seitenrand (32a) bis zu dem zweiten Seitenrand (32b) erstreckt.

2. Verfahren nach Anspruch 1, wobei die Breite der Grundplatte (26) des Versteifungselements (22) größer als das Doppelte des maximalen Durchmessers des Drehstifts (66a, 66b) ist.

3. Verfahren nach einem der vorhergehenden Ansprüche, wobei ein Schweißsystem (46) genutzt wird, das eine Mehrzahl von Schweißköpfen (54a, 54b) umfasst, die jeweils einen Drehstift (66a, 66b) sowie einen Absatz (74a, 74b), der sich an der Basis des Drehstifts erstreckt, umfassen,
das Schweißsystem ferner umfassend eine Gegendruckeinheit (50), die eine Auflagefläche (80) aufweist, das Verfahren umfassend:
- zum einen das Eindrücken der jeweiligen Drehstifte (66a, 66b) der Schweißköpfe (54a, 54b) in das Paneel (24) und in die Grundplatte (26) des Versteifungselements, dann das Bewegen der Schweißköpfe entlang der Grundplatte des Versteifungselements in der Schweißrichtung (56), durch eine lokale Aufweichung des Materials, welches das Paneel (24) bildet, und des Materials, welches die Grundplatte (26) des Versteifungselements bildet, die durch die Hitze herbeigeführt wird, die durch die Reibung der Drehstifte (66a, 66b) bewirkt wird;
- zum anderen das Aufbringen der Auflagefläche (80) der Gegendruckeinheit (50) auf die Grundplatte (26) des Versteifungselements (22), um dem Druck entgegenzuwirken, der von den Drehstiften (66a, 66b) ausgeübt wird.

4. Verfahren nach Anspruch 3, wobei die jeweiligen Drehstifte (66a, 66b) der Schweißköpfe (54a, 54b) gegenseitig entlang einer Querrichtung versetzt werden, die orthogonal zu der Schweißrichtung (56) und einer Drehachse (68a, 68b) der jeweiligen Drehstifte verläuft.

5. Verfahren nach Anspruch 3 oder 4, wobei sich der Abdruck der Gesamtheit der jeweiligen Drehstifte (66a, 66b) der Schweißköpfe (54a, 54b) im Querschnitt im Wesentlichen von dem ersten Seitenrand (32a) bis zu dem zweiten Seitenrand (32b) der Grundplatte (26) des Versteifungselements erstreckt.

6. Verfahren nach einem der Ansprüche 3 bis 5, wobei die Mehrzahl von Schweißköpfen drei Schweißköpfe (54a, 54b) umfasst, die entsprechend einer dreieckigen Ausgestaltung angeordnet sind.

7. Verfahren nach Anspruch 6, wobei die Mehrzahl von Schweißköpfen zwei seitliche Schweißköpfe (54a), die bezogen auf eine selbe Ebene (P) zentriert sind, die orthogonal zu der Schweißrichtung (56) verläuft, sowie einen mittleren Schweißkopf (54b), der in der Schweißrichtung (56) bezogen auf die jeweiligen seitlichen Schweißköpfe (54a) versetzt ist, umfasst.

8. Verfahren nach Anspruch 7, wobei ein erster (54b) der Schweißköpfe gegenüber einem Kern (30) des Versteifungselements (22) positioniert ist, während die zwei anderen Schweißköpfe (54b) bezogen auf den Kern (30) des Versteifungselements (22) versetzt sind, und der Drehstift (66b) des ersten Schweißkopfs (54b) weniger tief in die Grundplatte (26) des Versteifungselements (22) eindringt als die jeweiligen Drehstifte (66a) der zwei anderen Schweißköpfe (54a).

9. Verfahren nach Anspruch 8, wobei der erste Schweißkopf der mittlere Schweißkopf (54b) ist.

10. Verfahren nach einem der Ansprüche 7 bis 9, wobei sich die Schweißköpfe in einer solchen Richtung bewegen, dass der mittlere Schweißkopf (54b) hinter den seitlichen Schweißköpfen (54a) angeordnet ist.

11. Verfahren nach einem der Ansprüche 4 bis 10, wobei die Auflagefläche (80) zusammen von zwei Rollen gebildet ist, die von der Gegendruckeinheit getragen werden und die sich durch Rollen gegen die Grundplatte (26) des Versteifungselements (22) bewegen.

12. Schweißsystem (46) für die Umsetzung des Verfahrens nach einem der vorhergehenden Ansprüche, das drei Schweißköpfe (54a, 54b) umfasst, die jeweils einen Drehstift (66a, 66b) sowie einen Absatz (74a, 74b), der sich an der Basis des Drehstifts (66a, 66b) erstreckt, umfassen, **dadurch gekennzeichnet, dass** die Schweißköpfe (54a, 54b) in einem Dreieck angeordnet sind.

## Claims

1. Process for linear transparency friction stir welding (FSW) of a flange (26) of a stiffener (22) onto at least one panel (24) for an aircraft, wherein a weld bead (90) is made along said flange (26) of the stiffener by inserting at least one rotating pin (66a, 66b) into said panel (24) and into said flange (26) of the stiffener, and then by moving said rotating pin (66a, 66b) along the flange (26) of the stiffener in a direction of welding (56), owing to local softening of the material forming said panel (24) and of the material forming said flange (26) of the stiffener, caused by the heat produced by the friction of said rotating pin (66a, 66b), and wherein the width of said flange (26) of said stiffener (22) is greater than a maximum diameter of said rotating pin (66a, 66b), the process being **characterised in that** the material softening affects a region extending in cross-section from a first lateral edge (32a) to a second lateral edge (32b) of said flange (26) of the stiffener during movement of said rotating pin (66a, 66b), such that said weld bead (90) extends in cross-section from the first lateral edge (32a) to the second lateral edge (32b).

2. Process according to claim 1 in which the width of said flange (26) of said stiffener (22) is greater than double said maximum diameter of said rotating pin (66a, 66b).

3. Process according to any one of the preceding claims, wherein is used a welding system (46) which includes a plurality of welding heads (54a, 54b) each including a rotating pin (66a, 66b) as well as a shoulder (74a, 74b) which extends at the base of the rotating pin, where said welding system in addition includes a counter-bearing unit (50) which has a support surface (80), where said process includes:
- on the one hand inserting the respective rotating pins (66a, 66b) of said welding heads (54a, 54b) into said panel (24) and into said stiffener flange (26), then moving said welding heads along said stiffener flange in said direction of welding (56), said moving being made possible by local softening of the material forming said panel (24) and of the material forming said stiffener flange (26), caused by the heat produced by the friction of said rotating pins (66a, 66b);
- on the other hand, pressing said support surface (80) of said counter-bearing unit (50) onto said flange (26) of the stiffener (22) so as to counteract the pressure exerted by said rotating pins (66a, 66b).

4. Process according to claim 3, wherein said respective rotating pins (66a, 66b) of said welding heads (54a, 54b) are mutually offset in a transverse direction which is orthogonal to said direction of welding (56) and to respective axes of rotation (68a, 68b) of each of the rotating pins.

5. Process according to claim 3 or 4, wherein the footprint formed by all said respective rotating pins (66a, 66b) of said welding heads (54a, 54b) substantially extends in cross-section from the first lateral edge (32a) to the second lateral edge (32b) of the flange (26) of the stiffener.

6. Process according to any one of claims 3 to 5 wherein said plurality of welding heads includes three welding heads (54a, 54b) arranged according to a triangular configuration.

7. Process according to claim 6 wherein said three welding heads include two lateral welding heads (54a) centred in relation to a given plane (P) orthogonal to said direction of welding (56), as well as a central welding head (54b) offset in said direction of welding (56) in relation to each of said lateral welding heads (54a).

8. Process according to claim 7 wherein a first (54b) of said welding heads is positioned facing a web (30) of the stiffener (22) whilst the other two welding heads (54a) are offset in relation to said web (30) of the stiffener (22), and a penetration depth of the rotating pin (66b) of said first welding head (54b) into said flange (26) of the stiffener (22) is less than a penetration depth of the respective rotating pins (66a) of the other two welding heads (54a) into said flange (26) of the stiffener (22).

9. A process according to claim 8, wherein said first welding head is said central welding head (54b).

10. Process according to any one of claims 7 to 9 wherein said welding heads move in a direction such that said central welding head (54b) is arranged to the rear of said lateral welding heads (54a).

11. Process according to any one of claims 4 to 10, wherein said support surface (80) is formed jointly by two rollers which are carried by said counter-bearing unit and which move by rolling against said flange (26) of the stiffener (22).

12. Welding system (46) for the implementation of a welding process according to any one of the preceding claims, which includes three welding heads (54a, 54b), each of which includes a rotating pin (66a, 66b) as well as a shoulder (74a, 74b) extending at the base of said rotating pin, **characterized in that** said welding heads are arranged as a triangle.
